# EUROPÄISCHE PATENTSCHRIFT

(11) **EP 3 511 589 B1**
(45) Veröffentlichungstag und Bekanntmachung des Hinweises auf die Patenterteilung: **19.08.2020**
(21) Anmeldenummer: 18151103.1
(22) Anmeldetag: 10.01.2018
(51) Int. Cl.: F16D 55/226

(54) **SCHEIBENBREMSE FÜR NUTZFAHRZEUGE**
DISC BRAKE FOR COMMERCIAL VEHICLES
FREIN À DISQUE POUR VÉHICULES UTILITAIRES

(43) Veröffentlichungstag der Anmeldung: 17.07.2019
(73) Patentinhaber: WABCO Europe BVBA, 1170 Brussels (BE)
(72) Erfinder: KALMBACH, Marcel, 74360 Ilsfeld (DE); REDEMANN, Bernward, 68766 Hockenheim (DE)
(74) Vertreter: Copi, Joachim

(56) Entgegenhaltungen:
- EP-A1- 2 444 698
- DE-A1-102013 006 859
- US-A1- 2012 325 595

## Beschreibung

Die Erfindung betrifft eine Scheibenbremse nach dem Oberbegriff von Anspruch 1. Scheibenbremsen mit einer Primärdichtung und einer Sekundärdichtung im Bereich einer Stellspindel sind hinlänglich bekannt. Die Primärdichtung und die Sekundärdichtung schützen den inneren Bereich eines Bremssattels vor Umwelteinflüssen wie Schnee, Regen, Staub oder Steinen. Insbesondere soll die Funktionalität der Bauteile der Scheibenbremse zum Zuspannen von Bremsbelägen aufrechterhalten bleiben. Beispielsweise ist für eine Nachstelleinrichtung ein Schutz vor Umwelteinflüssen erforderlich. Unter anderem umfasst die Nachstelleinrichtung eine axial in Richtung der Scheibenbremsenachse angeordnete Stellspindel zum Nachstellen der Bremsbeläge gegen die Bremsscheibe. Wenn die Funktionalität der Stellspindel eingeschränkt ist oder die Stellspindel bedingt durch Korrosion beschädigt ist, kann die Scheibenbremse nicht mehr den Verschleiß der Bremsbeläge kompensieren und das Lüftspiel konstant halten. Das Lüftspiel wird schleichend größer und es kommt folglich zu einem Bremskraft- und einem Bremsmomentverlust.

Aus der WO99/49242 A1 sind drei Dichtungen zum Schutz des Innenraums des Bremssattels der Scheibenbremse bekannt. Eine Primärdichtung ist an einem Stellspindelkopf der Stellspindel und dem Verschlussdeckel angeordnet. Eine Sekundärdichtung liegt an der Stellspindel an und ist über ein Metallteil mit dem Druckbund verbunden. Eine dritte Dichtung ist zwischen einem Metallteil der Primärdichtung und dem Metallteil der Sekundärdichtung angeordnet.

Eine weitere Optimierung der Abdichtung des Innenraums vor Umwelteinflüssen geht aus der DE102011011394 A1 hervor. Eine Dichtung ist ein als Primärdichtung ausgeführter Faltenbalg und eine zweite Dichtung ist eine zum Faltenbalg konzentrisch angeordnete Sekundärdichtung. Die Primärdichtung ist über ein Metallteil mit einem Kunststoffteil verbunden, welches eine als Dichtlippe ausgebildete Sekundärdichtung aufweist. Über das Kunststoffteil sind die Primärdichtung und die Sekundärdichtung mit dem Verschlussdeckel verbunden.

Die DE102012006114 A1 beschreibt eine weitere Verbesserung der Abdichtung mittels einer Primärdichtung und einer Sekundärdichtung im Bereich der Stellspindel der Nachstellvorrichtung. Die Sekundärdichtung weist einen Gewindedichtring auf, der sich mit der Stellspindel der Nachstellvorrichtung dreht. Zudem weist die Sekundärdichtung eine nicht drehende Dichtmembran auf. Sowohl die Primärdichtung, als auch die Sekundärdichtung müssen einzeln an den Verschlussdeckel angebracht werden.

Eine weitere Möglichkeit der Abdichtung des Bremssattelinnenraums zeigt die DE102007059777 A1. Zur besseren Montage und Demontage ist eine Halteeinrichtung vorgesehen, die eine Sekundärdichtung hält und an der eine dritte Dichtung anliegt. Die Halteeinrichtung stützt sich an dem Druckbund ab. Eine Primärdichtung ist mit dem Stempel der Stellspindel und dem Verschlussdeckel verbunden. Im Falle einer undichten Primärdichtung schützen die Sekundärdichtung und die dritte Dichtung den Innenraum des Bremssattels vor Umwelteinflüssen.

Aufgabe der Erfindung ist es die DE102007059777 A1 derart weiter zu entwickeln, dass der Innenraum des Bremssattels mit den sich innerhalb des Bremssattels angeordneten Bauteilen vor Umwelteinflüssen geschützt ist und die Montage oder Demontage der Primärdichtung und der Sekundärdichtung verbessert wird. Weiterhin ist es Aufgabe der Erfindung die Herstellung des Verschlussdeckels zu vereinfachen.

Eine zusätzliche Verbesserung der Abdichtung des Bremssattelinnenraums einer Scheibenbremse geht aus der US2012/0325595 A1, der EP2444698 A1 und der DE102013006859 A1 hervor. Alle drei Dokumente zeigen eine Scheibenbremse mit einer Nachstelleinrichtung, wobei die Nachstelleinrichtung eine Stellspindel aufweist. Zusätzlich zu dem bisher genannten Stand der Technik sind die Sekundärdichtung und die Primärdichtung als eine einzige Dichtung ausgebildet, wodurch der Montageaufwand reduziert wird und Kosten gespart werden.

Die Primärdichtung und die Sekundärdichtung sind als Stempelschutzkappe ausgebildet . Das heißt, dass die Primärdichtung und die Sekundärdichtung keine eigenständigen Bauteile sind, die sich als Stempelschutzkappe zusammensetzen. Die Stempelschutzkappe ist vielmehr ein Bauteil das die Primärdichtung und der Sekundärdichtung umfasst. Bevorzugt bestehen die Primärdichtung und die Sekundärdichtung aus einem elastischen Material.

In einer weiteren Ausgestaltung ist die Sekundärdichtung innerhalb eines Ringraums eines Bremssattels einer Scheibenbremse angeordnet und erfüllt somit die Dichtfunktion, falls die Primärdichtung beschädigt wird. Die Sekundärdichtung ist mit einem Ende mit der Stellspindel in Kontakt. Die Sekundärdichtung gleitet mit dem Ende, das mit der Stellspindel in Kontakt ist, während einer axialen Drehbewegung der Stellspindel in Richtung der Bremsscheibe oder entgegengesetzt der Bremsscheibe über die Stellspindel.

Darüber hinaus ist in einer weiteren Ausgestaltung die Primärdichtung mit einem Dichtdurchmesser "D" an einem Stellspindelkopf der Stellspindel angeordnet und die Sekundärdichtung ist mit einem Dichtdurchmesser "D2" an einem Stellspindelhals der Stellspindel angeordnet. Der Dichtdurchmesser "D" der Primärdichtung kann größer oder kleiner sein als der Dichtdurchmesser "D2" der Sekundärdichtung. Es ist aber auch denkbar, dass der Dichtdurchmesser "D" der Primärdichtung und der Dichtdurchmesser "D2" der Sekundärdichtung gleich groß sind.

Die Stempelschutzkappe ist in einer weiteren Ausgestaltung über eine Halteeinrichtung an einem Verschlussdeckel des Bremssattels angeordnet. Besonders vorteilhaft ist die Stempelschutzkappe über die Halteeinrichtung an dem Verschlussdeckel des Bremssattels kraftschlüssig angeordnet. Die Halteeinrichtung ist bevorzugt ein Metallprofil, welches im Querschnitt eine L-Form aufweist. Die Halteeinrichtung kann auch aus Kunststoff oder anderen Materialien bestehen.

Erfindungsgemäß weist die Stempelschutzkappe radial in Richtung des Verschlussdeckels des Bremssattels eine Hinterschneidung auf. Unter einer radialen Richtung ist eine quer zur Scheibenbremsenachse verlaufende Richtung zu verstehen. Die Hinterschneidung dient als zusätzliche Verliersicherung und zu einer Erhöhung der Auszugskräfte der Primärdichtung. Als Auszugskraft sind Demontagekräfte gemeint, die benötigt werden um die Stempelschutzkappe vom Deckel zu entfernen.

Zumindest eine Noppe bildet die Hinterschneidung der Stempelschutzkappe in einer weiteren vorteilhaften Ausgestaltung Die zumindest eine Noppe ist bevorzugt aus dem gleichen Material wie die Primärdichtung und die Sekundärdichtung.

Eine Öffnung des Verschlussdeckels des Bremssattels und/oder die Nut des Stellspindelkopfs und/oder der Stellspindelhals sind in einer weiteren Ausgestaltung als kreisförmiges Profil, als ovales Profil oder als Polygonprofil ausgebildet. Bevorzugt werden die Primärdichtung und die Sekundärdichtung auf einem kreisförmigen Profil aufgezogen.

Darüber hinaus ist die Stempelschutzkappe in einer weiteren vorteilhaften Ausgestaltung direkt an dem Verschlussdeckel des Bremssattels angeordnet. Die Halteinrichtung wird nicht mehr benötigt, wodurch Montageschritte reduziert und Kosten eingespart werden.

Ohne die Halteeinrichtung wird die Stempelschutzkappe in einer weiteren Ausgestaltung in einer umlaufenden Nut des Verschlussdeckels fixiert. Die umlaufende Nut des Verschlussdeckels weist eine V-Form oder eine U-Form auf. Die notwendige Vorspannung auf eine Ringwulst eines gemeinsamen Endes der Primärdichtung und der Sekundärdichtung der Stempelschutzkappe wird durch eine Änderung des Durchmessers der Ringwulst erzielt.

In einer weiteren Ausführung ist die Stempelschutzkappe durch Aufvulkanisierung mit dem Verschlussdeckel fixiert. Unter einer Aufvulkanisierung ist eine thermoplastische Umformung zu verstehen. Durch die Aufvulkanisierung wird zwischen der Stempelschutzkappe und dem Verschlussdeckel eine stoffschlüssige Verbindung hergestellt.

In einer weiteren Ausgestaltung ist die Stempelschutzkappe demontierbar. Die Stempelschutzkappe kann ausgetauscht werden. Beispielsweise kann eine beschädigte Stempelschutzkappe im Service gegen eine neue Stempelschutzkappe ersetzt werden.

Außerdem ist die Primärdichtung in einer weiteren Ausgestaltung, bezogen auf die Scheibenbremsenachse, radial an dem Stellspindelkopf der Stellspindel angeordnet. Die Primärdichtung ist in Richtung der Scheibenbremsenachse beweglich.

Darüber hinaus ist die Sekundärdichtung in einer weiteren Ausgestaltung im Querschnitt L-förmig ausgebildet.

Die Primärdichtung ist in einer weiteren Ausgestaltung ein Faltenbalg. Während einer axialen Bewegung der Stellspindel in Richtung der Bremsscheibe entfaltet sich der Faltenbalg und faltet sich in einer der Bremsscheibe entgegengesetzten Richtung zusammen. Damit bleibt die Stellspindel vor Umwelteinflüssen vollständig geschützt.

Vorteilhaft ist der Verschlussdeckel in einer weiteren Ausführung fertigungstechnisch aus einer Biegerichtung herstellbar. Als Biegerichtung ist die Richtung zu verstehen, aus der der Verschlussdeckel mit dem Bearbeitungswerkzeug bearbeitet wird. Der Verschlussdeckel muss während des Bearbeitungsvorgangs nicht mehr gewendet werden. Insbesondere wird die Form des Verschlussdeckels mit einem Stanzwerkzeug und einem Stempel hergestellt. Ein zweiter Montageschritt aus einer zweiten Biegerichtung ist nicht notwendig.

Nachfolgend werden ausgewählte Ausführungsbeispiele der Erfindung anhand der beigefügten Figuren erläutert.

Es zeigt:
Fig. 1 eine geschnittene Ansicht einer Scheibenbremse mit einer Stempelschutzkappe,
Fig. 2 einen Querschnitt der Stempelschutzkappe mit einer Halteeinrichtung im Detail,
Fig. 2a eine Detailansicht der Hinterschneidung einer Stempelschutzkappe gemäß Fig. 1 und Fig. 2,
Fig. 3 eine geschnittene Seitenansicht einer Stellspindel mit einer Stempelschutzkappe ohne eine Halteeinrichtung im eingebauten Zustand,
Fig. 4 einen Querschnitt der Stempelschutzkappe ohne eine Halteeinrichtung,
Fig. 5 einen Verschlussdeckel zur Aufnahme einer Stempelschutzkappe mit einem ovalen Profil,
Fig. 6 einen Verschlussdeckel zur Aufnahme einer Stempelschutzkappe mit einem Polygonprofil.

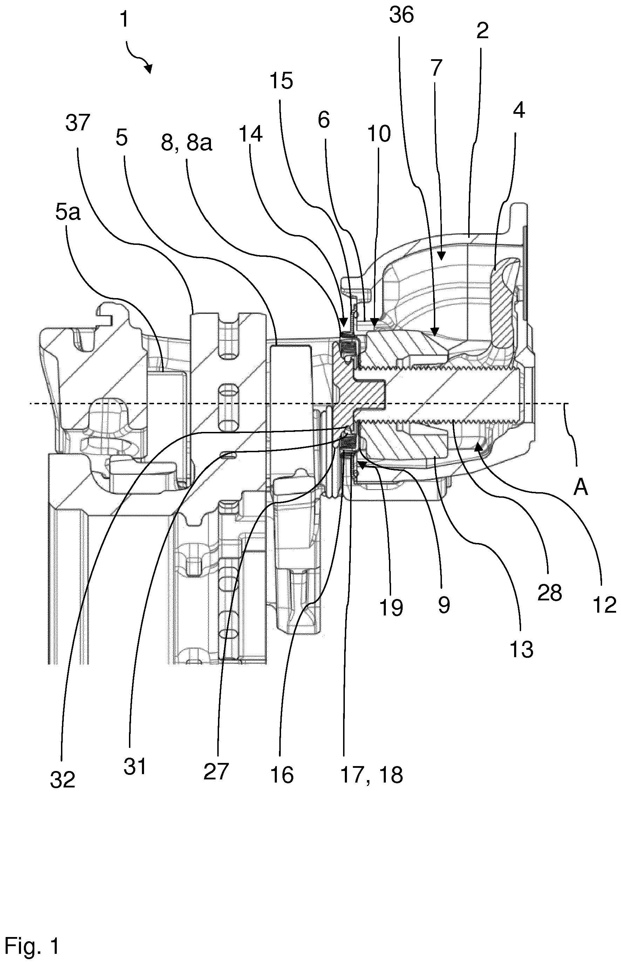

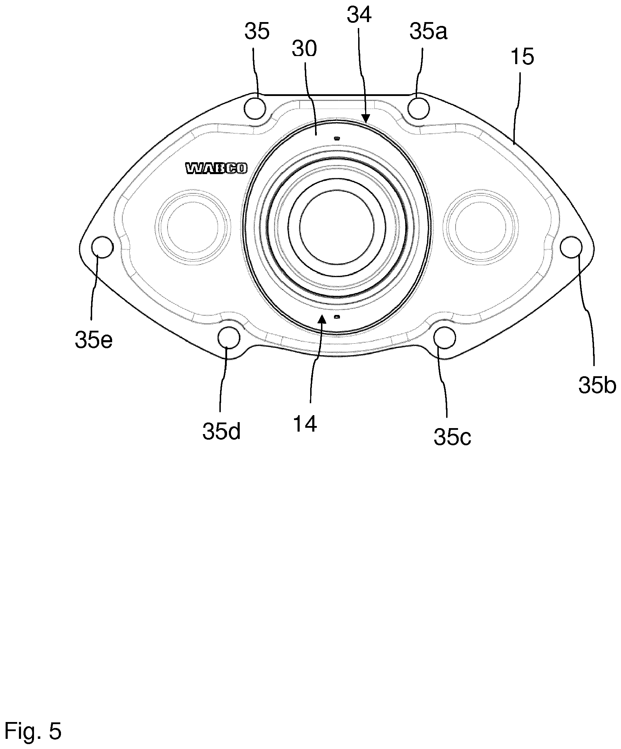

Fig. 1 zeigt eine geschnittene Seitenansicht einer Scheibenbremse 1 mit einem Bremssattel 2 und einer zwischen zwei Bremsbelägen 5, 5a angeordneten Bremsscheibe 37. Über einen Aktuator wird ein Betätigungshebel 4 axial in Richtung der Bremsscheibe 37 oder entgegengesetzt in Richtung der Bremsscheibe 37 bewegt. Aufgrund der Drehbewegung des Betätigungshebels 4 bewegt sich eine Stellspindel 12 axial in Richtung der Bremsscheibe 37 bis die Bremsbeläge 5, 5a an der Bremsscheibe 37 anliegen. Die Bremsbeläge 5, 5a lösen sich von der Bremsscheibe 37, wenn sich die Stellspindel 12 entgegengesetzt der Richtung der Bremsscheibe 37 bewegt. Die Stellspindel 12 ist innerhalb eines Innenraums 7 des Bremssattels 2, axial entlang einer Scheibenbremsenachse A, angeordnet und erstreckt sich, axial entlang der Scheibenbremsenachse A, durch einen Druckbund 13. Die Stellspindel 12, ein Stellspindelkopf 27 und der Druckbund 13 bilden eine Nachstelleinrichtung 36. Ein Ringraum 10 ist von einer Innenwand 6 einer Durchgangsöffnung 19 des Bremssattels 2 sowie der sich durch die Durchgangsöffnung 19 hindurchstreckenden Nachstelleinrichtung 36 begrenzt. An dem Bremssattel 2 ist in dem Bereich der Durchgangsöffnung 19 des Bremssattels 2 ein Verschlussdeckel 15 des Bremssattels 2 mit einer Stempelschutzkappe 14 angeordnet. Der Verschlussdeckel 15 des Bremssattels 2 weist eine Öffnung 34 (Fig. 5) auf, wobei die Stempelschutzkappe 14 in der Öffnung 34 angeordnet ist. Die Stempelschutzkappe 14 weist eine Primärdichtung 8, eine Sekundärdichtung 9 und eine Halteeinrichtung 16 auf. Die Primärdichtung 8 ist als Faltenbalg 8a ausgebildet und weist an einem Ende eine Ringwulst 31 auf, die in einer Nut 32 des Stellspindelkopfs 27 der Stellspindel 12 befestigt ist. Der Faltenbalg 8a bewegt sich mit der Stellspindel 12 in axialer Richtung der Scheibenbremsenachse A. Die Sekundärdichtung 9 liegt an einem Stellspindelhals 28 der Stellspindel 12 an. Zusätzlich weist die Stempelschutzkappe 14 eine als Noppe 17 ausgebildete Hinterschneidung 18 auf.

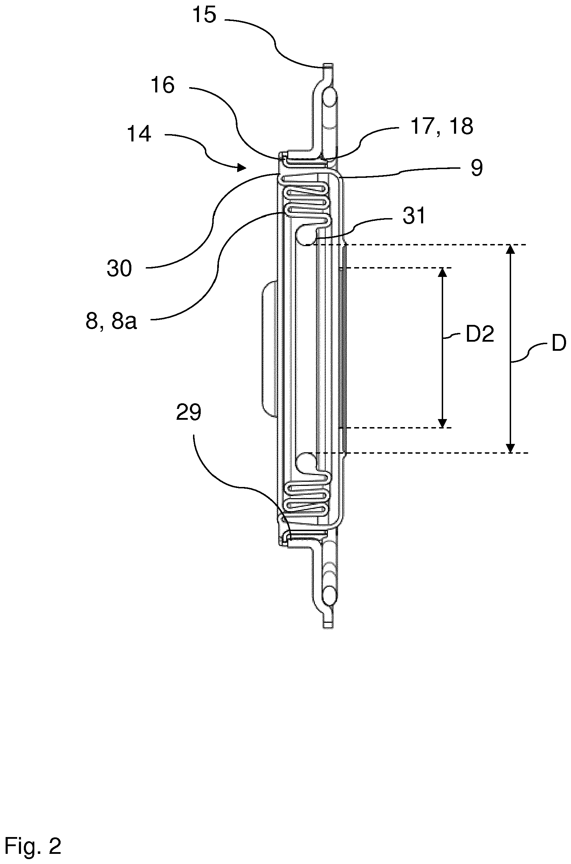

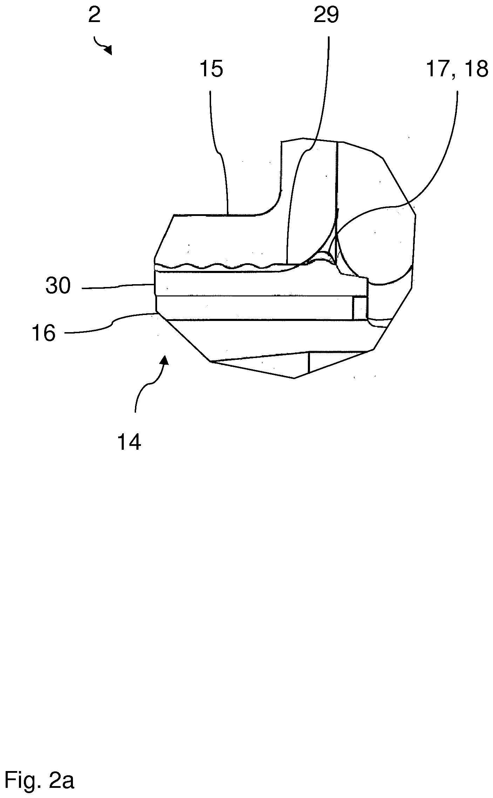

In Fig. 2 ist die Stempelschutzkappe 14 mit der Halteeinrichtung 16 nach Fig. 1 im Detail gezeigt. Besonders gut sichtbar ist die Anordnung der Stempelschutzkappe 14 an dem Verschlussdeckel 15 des Bremssattels 2 (Fig. 1). Die Halteeinrichtung 16 ist als Metallring ausgebildet und ist an einem gemeinsamen Ende 30 der Primärdichtung 8 und der Sekundärdichtung 9 in der Stempelschutzkappe 14 fixiert. Die Halteeinrichtung 16 dient zur Formgebung und Stabilisierung der Stempelschutzkappe 14. Die Stempelschutzkappe 14 wird mit der Halteeinrichtung 16, mittels der Spannkraft der Halteeinrichtung 16, gegen eine Innenwand 29 des Verschlussdeckels 15 des Bremssattels 2 gedrückt. Die Verbindung der Stempelschutzkappe 14 mit dem Verschlussdeckel 15 wird durch eine Verpressung erziehlt. Die Stempelschutzkappe 14 ist damit kraftschlüssig mit dem Verschlussdeckel 15 des Bremssattels 2 verbunden. Die als Noppe 17 ausgebildete Hinterschneidung 18 ist als zusätzliche Verliersicherung gegen ein Lösen der Stempelschutzkappe 14 von dem Verschlussdeckel 15 des Bremssattels 2 an der Stempelschutzkappe 14 angeordnet. Darüber hinaus ist die Ringwulst 31 der Primärdichtung 8 gut sichtbar. Die Primärdichtung 8 weist im ausgebauten Zustand einen größeren Dichtdurchmesser D auf, als der Dichtdurchmesser D2 der Sekundärdichtung 9 im ausgebauten Zustand.

Einen detaillierten Ausschnitt der als Noppe 17 ausgebildeten Hinterschneidung 18 nach Fig. 1 und Fig. 2, zeigt Fig. 2a.
Die Noppe 17 wirkt als Widerhaken gegen ein Verrutschen der Stempelschutzkappe 14. Die Noppe 17 stützt sich an dem Verschlussdeckel 15 des Bremssattels 2 ab. Das gemeinsames Ende 30 der Primärdichtung 8 und der Sekundärdichtung 9 weist im Bereich der Innenwand 29 des Verschlussdeckels 15 eine gewellte Struktur auf, die ein Verrutschen der Stempelschutzkappe 14 aus dem Verschlussdeckel 15 des Bremssattels 2 minimiert.

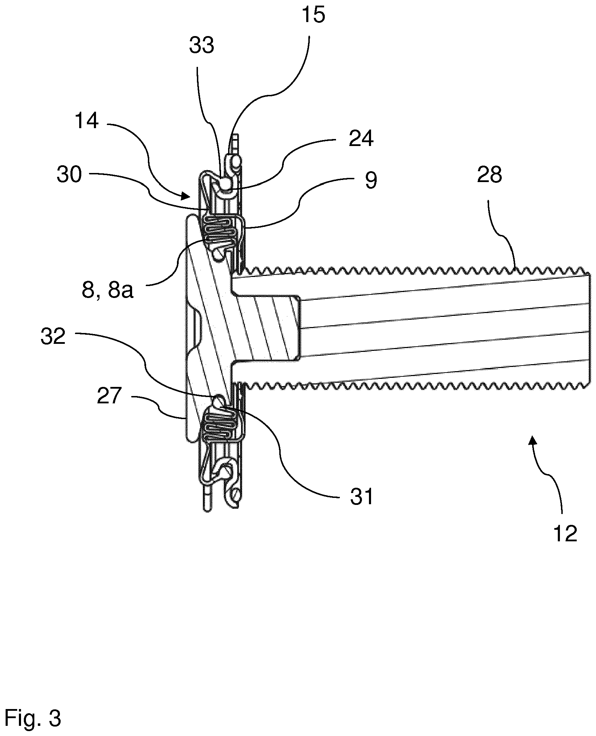

Fig. 3 zeigt die Stempelschutzkappe 14 für eine Scheibenbremse 1 nach Fig. 1 ohne eine Halteeinrichtung 16. Die Stempelschutzkappe 14 weist eine als Faltenbalg 8a ausgestaltete Primärdichtung 8 und eine Sekundärdichtung 9 auf. Zusätzlich weist die Stempelschutzkappe 14 eine Ringwulst 33 an einem gemeinsamen Ende 30 der Primärdichtung 8 und der Sekundärdichtung 9, sowie eine Ringwulst 31 an der Primärdichtung 8 auf. Die Ringwulst 31 der Primärdichtung 8 ist in einer Nut 32 des Stellspindelkopfs 27 fixiert. Die Sekundärdichtung 9 liegt an einem Stellspindelhals 28 der Stellspindel 12 an. Die Ringwulst 33 des gemeinsamen Endes 30 der Primärdichtung 8 und der Sekundärdichtung 9 ist in einer umlaufenden Nut 24 des Verschlussdeckels 15 eingeknüpft. Die umlaufende Nut 24 des Verschlussdeckels 15 ist als V-förmige Nut ausgebildet.

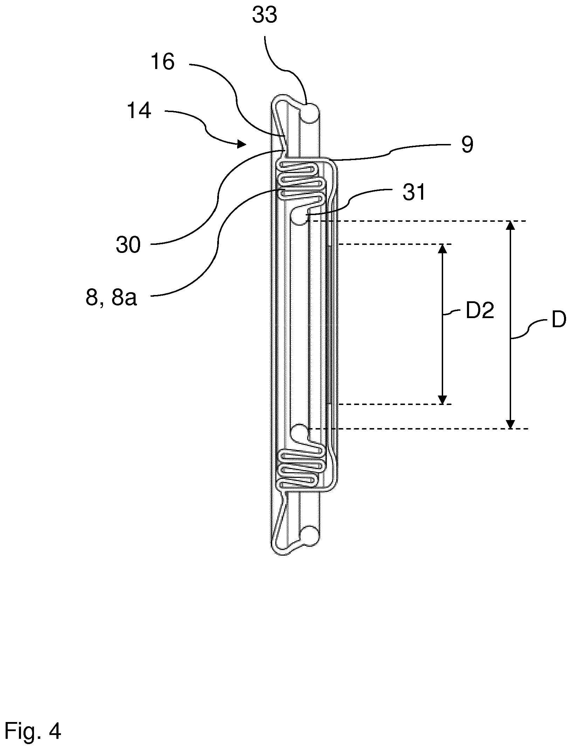

In Fig. 4 ist die Stempelschutzkappe 14 nach Fig. 3 vollständig im Querschnitt gezeigt. Insbesondere ist die Ausrichtung der Ringwulst 33 des gemeinsamen Endes 30 der Primärdichtung 8 und der Sekundärdichtung 9 erkennbar. Zudem veranschaulicht Fig. 4, dass der Dichtdurchmesser D der Primärdichtung 8 größer ist, als der Dichtdurchmesser D2 der Sekundärdichtung.

Fig. 5 zeigt einen Verschlussdeckel 15 des Bremssattels 2 mit einer Öffnung 34 zur Aufnahme einer Stempelschutzkappe 14 für eine Scheibenbremse 1 nach Fig. 1. Die Öffnung 34 des Verschlussdeckels 15 des Bremssattels 2 weist ein ovales Profil auf. Zur Fixierung des Verschlussdeckels 15 des Bremssattels 2 sind an dem Bremssattel 2 entlang des Verschlussdeckels 15 des Bremssattels 2 sechs Bohrlöcher 35, 35a, 35b, 35c, 35d, 35e angeordnet. Der Verschlussdeckel 15 des Bremssattels 2 schließt die Durchgangsöffnung 19 des Bremssattels 2 (Fig. 1). Das gemeinsame Ende 30 der Stempelschutzkappe 14 ist als ovales Profil ausgebildet. Die Stempelschutzkappe 14 ist in der Öffnung 34 des Verschlussdeckels 15 des Bremssattels 2 angeordnet.

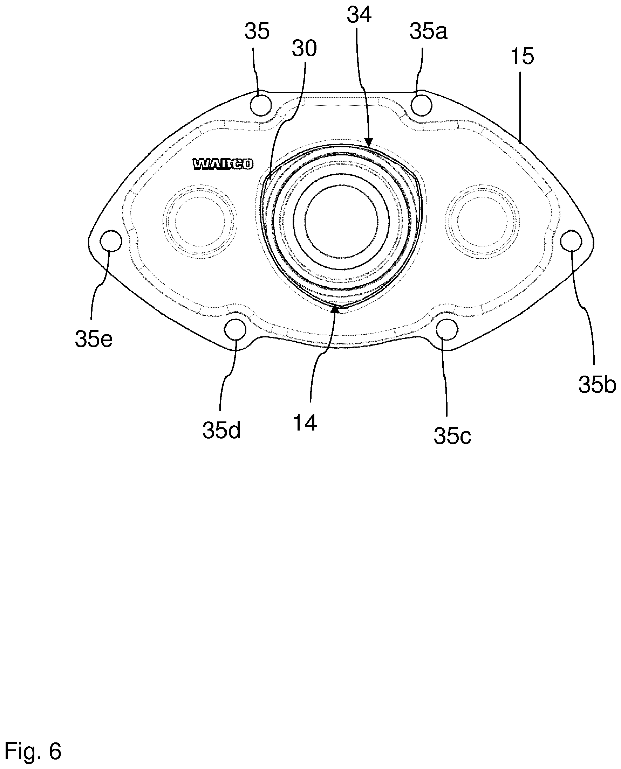

Fig. 6 zeigt einen Verschlussdeckel 15 des Bremssattels 2 nach Fig. 5 für eine Scheibenbremse nach Fig. 1. In Fig. 6 weist der Verschlussdeckel 15 des Bremssattels 2 eine Öffnung 34 mit einem Polygonprofil auf. Das gemeinsame Ende 30 der Stempelschutzkappe 14 ist zur Fixierung der Stempelschutzkappe 14 in der Öffnung 34 des Verschlussdeckels 15 des Bremssattels 2 auch als Polygonprofil ausgebildet.

### Bezugszeichenliste als Teil der Beschreibung

- 1: Scheibenbremse
- 2: Bremssattel
- 4: Betätigungshebel
- 5, 5a: Bremsbelag
- 6: Innenwand einer Durchgangsöffnung 19
- 7: Innenraum des Bremssattels 2
- 8: Primärdichtung
- 8a: Faltenbalg
- 9: Sekundärdichtung
- 10: Ringraum
- 12: Stellspindel
- 13: Druckbund
- 14: Stempelschutzkappe
- 15: Verschlussdeckel des Bremssattels 2
- 16: Halteeinrichtung
- 17: Noppe
- 18: Hinterschneidung
- 19: Durchgangsöffnung des Bremssattels 2
- 24: umlaufende Nut des Verschlussdeckels 15
- 27: Stellspindelkopf
- 28: Stellspindelhals
- 29: Innenwand des Verschlussdeckels 15 des Bremssattels 2
- 30: gemeinsames Ende der Primärdichtung 8 und der Sekundärdichtung 9
- 31: Ringwulst der Primärdichtung 8
- 32: Nut des Stellspindelkopfs 27
- 33: Ringwulst des gemeinsamen Ende 30 der Primärdichtung 8 und der Sekundärdichtung 9
- 34: Öffnung des Verschlussdeckels 15 des Bremssattels 2
- 35 - 35e: Bohrlöcher des Verschlussdeckels des Bremssattels 2
- 36: Nachstelleinrichtung
- 37: Bremsscheibe
- A: Scheibenbremsenachse
- D: Dichtdurchmesser der Primärdichtung 8
- D2: Dichtdurchmesser der Sekundärdichtung 9

## Patentansprüche

1. Scheibenbremse (1) für Nutzfahrzeuge mit einem Bremssattel (2), einer Bremsscheibe (37), einem axial zu einer Scheibenbremsenachse (A) der Bremsscheibe (37) angeordneten Betätigungshebel (4), einer Nachstelleinrichtung (36) umfassend eine Stellspindel (12), einen Druckbund (13) und einen Stellspindelkopf (27), wobei die Nachstelleinrichtung (36) zumindest teilweise innerhalb eines Innenraums (7) des Bremssattels (2) angeordnet ist, einer Primärdichtung (8) zum Abdichten des Innenraums 7 des Bremssattels 2, einem Ringraum (10), der von einer Innenwand (6) einer Durchgangsöffnung (19) des Bremssattels (2) und der Nachstelleinrichtung begrenzt ist und einer Sekundärdichtung (9) zum zumindest teilweise Abdichten des Innenraums (7) des Bremssattels (2), wobei die Primärdichtung (8) und die Sekundärdichtung (9) als Stempelschutzkappe (14) ausgebildet sind, **dadurch gekennzeichnet, dass** die Stempelschutzkappe (14) radial in Richtung des Verschlussdeckels (15) des Bremssattels (2) eine Hinterschneidung (18), als zusätzliche Verliersicherung gegen ein Lösen der Stempelschutzkappe (14) von dem Verschlussdeckel (15) des Bremssattels (2) aufweist und wobei die Stempelschutzkappe (14) ein Bauteil ist, dass die Primärdichtung (8) und die Sekundärdichtung (9) umfasst.

2. Scheibenbremse (1) für Nutzfahrzeuge nach Anspruch 1, **dadurch gekennzeichnet, dass** die Sekundärdichtung (9) innerhalb des Ringraums (10) angeordnet ist.

3. Scheibenbremse (1) für Nutzfahrzeuge nach Anspruch 1 oder 2, **dadurch gekennzeichnet, dass** die Primärdichtung (8) mit einem Dichtdurchmesser (D) an dem Stellspindelkopf (27) angeordnet ist und die Sekundärdichtung (9) mit einem Dichtdurchmesser (D2) an einem Stellspindelhals (28) der Stellspindel (12) angeordnet ist.

4. Scheibenbremse (1) für Nutzfahrzeuge nach einem der vorangegangenen Ansprüche, **dadurch gekennzeichnet, dass** die Stempelschutzkappe (14) über eine Halteeinrichtung (16) an einem Verschlussdeckel (15) des Bremssattels (2) angeordnet ist.

5. Scheibenbremse (1) für Nutzfahrzeuge nach Anspruch 4, **dadurch gekennzeichnet, dass** zumindest eine Noppe (17) die Hinterschneidung (18) der Stempelschutzkappe (14) bildet.

6. Scheibenbremse (1) für Nutzfahrzeuge nach einem der Ansprüche 4 bis 5, **dadurch gekennzeichnet, dass** eine Öffnung (34) des Verschlussdeckels (15) des Bremssattels (2) und/oder eine Nut (32) des Stellspindelkopfs (27) und/oder der Stellspindelhals (28) als kreisförmiges Profil, als ovales Profil oder als Polygonprofil ausgebildet sind.

7. Scheibenbremse (1) für Nutzfahrzeuge nach einem der Ansprüche 4 bis 6, **dadurch gekennzeichnet, dass** die Stempelschutzkappe (14) direkt an dem Verschlussdeckel (15) des Bremssattels (2) angeordnet ist.

8. Scheibenbremse für Nutzfahrzeuge nach einem der Ansprüche 4 bis 7, **dadurch gekennzeichnet, dass** die Stempelschutzkappe (14) in einer umlaufenden Nut (24) des Verschlussdeckels (15) fixiert ist.

9. Scheibenbremse für Nutzfahrzeuge nach einem der Ansprüche 4 bis 8, **dadurch gekennzeichnet, dass** die Stempelschutzkappe (14) durch Aufvulkanisierung an dem Verschlussdeckel (15) fixiert ist.

10. Scheibenbremse (1) für Nutzfahrzeuge nach einem der vorangegangenen Ansprüche, **dadurch gekennzeichnet, dass** die Stempelschutzkappe (14) demontierbar ist.

11. Scheibenbremse (1) für Nutzfahrzeuge nach einem der vorangegangenen Ansprüche, **dadurch gekennzeichnet, dass** die Primärdichtung (8), bezogen auf die Scheibenbremsenachse (A), radial an dem Stellspindelkopf (27) der Stellspindel (12) angeordnet ist und die Primärdichtung (8) in Richtung der Scheibenbremsenachse (A) beweglich ist.

12. Scheibenbremse (1) für Nutzfahrzeuge nach einem der vorangegangenen Ansprüche, **dadurch gekennzeichnet, dass** die Sekundärdichtung (9) im Querschnitt L-förmig ausgebildet ist.

13. Scheibenbremse (1) für Nutzfahrzeuge nach einem der vorangegangenen Ansprüche, **dadurch gekennzeichnet, dass** die Primärdichtung (8) ein Faltenbalg (8a) ist.

14. Scheibenbremse (1) für Nutzfahrzeuge nach einem der Ansprüche 4 bis 13, **dadurch gekennzeichnet, dass** der Verschlussdeckel (15) fertigungstechnisch aus einer Biegerichtung herstellbar ist.

## Claims

1. Disc brake (1) for commercial vehicles with a brake calliper (2), a brake disc (37), an actuating lever (4) which is arranged axially with respect to a disc brake axis (A) of the brake disc (37), an adjusting device (36) comprising an adjusting spindle (12), a thrust collar (13) and an adjusting spindle head (27), the adjusting device (36) being arranged at least partially within an interior space (7) of the brake calliper (2), a primary seal (8) for sealing the interior space (7) of the brake calliper (2), an annular space (10) which is delimited by an inner wall (6) of a through opening (19) of the brake calliper (2) and the adjusting device, and a secondary seal (9) for at least partially sealing the interior space (7) of the brake calliper (2), the primary seal (8) and the secondary seal (9) being configured as a piston protective cap (14), **characterized in that** the piston protective cap (14) has an undercut (18) radially in the direction of the closure cover (15) of the brake calliper (2), as an additional captive securing means against a release of the piston protective cap (14) from the closure cover (15) of the brake calliper (2), and the piston protective cap (14) being a component that comprises the primary seal (8) and the secondary seal (9).

2. Disc brake (1) for commercial vehicles according to Claim 1, **characterized in that** the secondary seal (9) is arranged within the annular space (10).

3. Disc brake (1) for commercial vehicles according to Claim 1 or 2, **characterized in that** the primary seal (8) is arranged with a sealing diameter (D) on the adjusting spindle head (27), and the secondary seal (9) is arranged with a sealing diameter (D2) on an adjusting spindle neck (28) of the adjusting spindle (12).

4. Disc brake (1) for commercial vehicles according to one of the preceding claims, **characterized in that** the piston protective cap (14) is arranged via a holding device (16) on a closure cover (15) of the brake calliper (2).

5. Disc brake (1) for commercial vehicles according to Claim 4, **characterized in that** at least one bump (17) forms the undercut (18) of the piston protective cap (14).

6. Disc brake (1) for commercial vehicles according to either of Claims 4 and 5, **characterized in that** an opening (34) of the closure cover (15) of the brake calliper (2) and/or a groove (32) of the adjusting spindle head (27) and/or the adjusting spindle neck (28) are/is configured as a circular profile, as an oval profile or as a polygonal profile.

7. Disc brake (1) for commercial vehicles according to one of Claims 4 to 6, **characterized in that** the piston protective cap (14) is arranged directly on the closure cover (15) of the brake calliper (2).

8. Disc brake for commercial vehicles according to one of Claims 4 to 7, **characterized in that** the piston protective cap (14) is fixed in a circumferential groove (24) of the closure cover (15).

9. Disc brake for commercial vehicles according to one of Claims 4 to 8, **characterized in that** the piston protective cap (14) is fixed by being vulcanized onto the closure cover (15).

10. Disc brake (1) for commercial vehicles according to one of the preceding claims, **characterized in that** the piston protective cap (14) can be removed.

11. Disc brake (1) for commercial vehicles according to one of the preceding claims, **characterized in that** the primary seal (8) is arranged radially, in relation to the disc brake axis (A), on the adjusting spindle head (27) of the adjusting spindle (12), and the primary seal (8) can be moved in the direction of the disc brake axis (A).

12. Disc brake (1) for commercial vehicles according to one of the preceding claims, **characterized in that** the secondary seal (9) is of L-shaped configuration in cross section.

13. Disc brake (1) for commercial vehicles according to one of the preceding claims, **characterized in that** the primary seal (8) is a boot (8a).

14. Disc brake (1) for commercial vehicles according to one of Claims 4 to 13, **characterized in that** the closure cover (15) can be produced from one bending direction in terms of manufacturing technology.

## Revendications

1. Frein à disque (1) pour véhicules utilitaires comprenant un étrier de frein (2), un disque de frein (37), un levier d'actionnement (4) disposé axialement par rapport à un axe de frein à disque (A) du disque de frein (37), un dispositif de réglage (36) comprenant une broche de réglage (12), un épaulement de pression (13) et une tête de broche de réglage (27), le dispositif de réglage (36) étant disposé au moins en partie à l'intérieur d'un espace intérieur (7) de l'étrier de frein (2), un joint d'étanchéité primaire (8) pour l'étanchéité de l'espace intérieur (7) de l'étrier de frein (2), un espace annulaire (10) qui est limité par une paroi intérieure (6) d'une ouverture de passage (19) de l'étrier de frein (2) et par le dispositif de réglage, et un joint d'étanchéité secondaire (9) pour étanchéifier au moins en partie l'espace intérieur (7) de l'étrier de frein (2), le joint d'étanchéité primaire (8) et le joint d'étanchéité secondaire (9) étant réalisés sous forme de capuchon de protection de poinçon (14), **caractérisé en ce que** le capuchon de protection de poinçon (14) présente, radialement dans la direction du couvercle de fermeture (15) de l'étrier de frein (2), une contre-dépouille (18) en tant que protection antiperte supplémentaire empêchant un desserrage du capuchon de protection de poinçon (14) du couvercle de fermeture (15) de l'étrier de frein (2) et le capuchon de protection de poinçon (14) étant un composant qui comprend le joint d'étanchéité primaire (8) et le joint d'étanchéité secondaire (9).

2. Frein à disque (1) pour véhicules utilitaires selon la revendication 1, **caractérisé en ce que** le joint d'étanchéité secondaire (9) est disposé à l'intérieur de l'espace annulaire (10).

3. Frein à disque (1) pour véhicules utilitaires selon la revendication 1 ou 2, **caractérisé en ce que** le joint d'étanchéité primaire (8) est disposé avec un diamètre d'étanchéité (D) au niveau de la tête de broche de réglage (27) et le joint d'étanchéité secondaire (9) est disposé avec un diamètre d'étanchéité (D2) au niveau d'un col de broche de réglage (28) de la broche de réglage (12).

4. Frein à disque (1) pour véhicules utilitaires selon l'une quelconque des revendications précédentes, **caractérisé en ce que** le capuchon de protection de poinçon (14) est disposé par le biais d'un dispositif de retenue (16) au niveau d'un couvercle de fermeture (15) de l'étrier de frein (2).

5. Frein à disque (1) pour véhicules utilitaires selon la revendication 4, **caractérisé en ce qu'**au moins une boursouflure (17) forme la contre-dépouille (18) du capuchon de protection de poinçon (14).

6. Frein à disque (1) pour véhicules utilitaires selon l'une quelconque des revendications 4 et 5, **caractérisé en ce qu'**une ouverture (34) du couvercle de fermeture (15) de l'étrier de frein (2) et/ou une rainure (32) de la tête de broche de réglage (27) et/ou du col de broche de réglage (28) sont réalisées sous forme de profil de forme circulaire, sous forme de profil ovale ou sous forme de profil polygonal.

7. Frein à disque (1) pour véhicules utilitaires selon l'une quelconque des revendications 4 à 6, **caractérisé en ce que** le capuchon de protection de poinçon (14) est disposé directement sur le couvercle de fermeture (15) de l'étrier de frein (2).

8. Frein à disque pour véhicules utilitaires selon l'une quelconque des revendications 4 à 7, **caractérisé en ce que** le capuchon de protection de poinçon (14) est fixé dans une rainure périphérique (24) du couvercle de fermeture (15).

9. Frein à disque pour véhicules utilitaires selon l'une quelconque des revendications 4 à 8, **caractérisé en ce que** le capuchon de protection de poinçon (14) est fixé par vulcanisation sur le couvercle de fermeture (15).

10. Frein à disque (1) pour véhicules utilitaires selon l'une quelconque des revendications précédentes, **caractérisé en ce que** le capuchon de protection de poinçon (14) est démontable.

11. Frein à disque (1) pour véhicules utilitaires selon l'une quelconque des revendications précédentes, **caractérisé en ce que** le joint d'étanchéité primaire (8), par rapport à l'axe de frein à disque (A), est disposé radialement au niveau de la tête de broche de réglage (27) de la broche de réglage (12) et le joint d'étanchéité primaire (8) est déplaçable dans la direction de l'axe de frein à disque (A).

12. Frein à disque (1) pour véhicules utilitaires selon l'une quelconque des revendications précédentes, **caractérisé en ce que** le joint d'étanchéité secondaire (9) est réalisé avec une section transversale en forme de L.

13. Frein à disque (1) pour véhicules utilitaires selon l'une quelconque des revendications précédentes, **caractérisé en ce que** le joint d'étanchéité primaire (8) est un soufflet (8a).

14. Frein à disque (1) pour véhicules utilitaires selon l'une quelconque des revendications 4 à 13, **caractérisé en ce que** le couvercle de fermeture (15) peut être fabriqué par une technique de fabrication à partir d'une direction de centrage.
